(19) **Europäisches Patentamt / European Patent Office / Office européen des brevets**

(11) **EP 1 617 098 B1**

(12) **EUROPEAN PATENT SPECIFICATION**

(45) Date of publication and mention
of the grant of the patent:
**29.06.2011 Bulletin 2011/26**

(21) Application number: **05015442.6**

(22) Date of filing: **15.07.2005**

(51) Int Cl.:
*F16F 7/12* (2006.01) *B62D 21/15* (2006.01)

(54) **Shock absorbing component for automobiles**

Stoßabsorbierendes Bauelement für Kraftfahrzeuge

Composant absorbeur de choc pour automobiles

(84) Designated Contracting States:
**DE GB**

(30) Priority: **15.07.2004 JP 2004209003**

(43) Date of publication of application:
**18.01.2006 Bulletin 2006/03**

(73) Proprietor: **Honda Motor Co., Ltd.**
**Tokyo (JP)**

(72) Inventors:
- **Abe, Daisei**
  **Wako-shi,**
  **Saitama-ken, 351-0193, (JP)**
- **Yamaki, Jogen**
  **Wako-shi,**
  **Saitama-ken, 351-0193, (JP)**
- **Urushiyama, Yuta**
  **Wako-shi,**
  **Saitama-ken, 351-0193, (JP)**

(74) Representative: **Herzog, Markus et al**
**Weickmann & Weickmann**
**Patentanwälte**
**Postfach 86 08 20**
**81635 München (DE)**

(56) References cited:
WO-A-03/066383          DE-A1- 4 423 687
US-A1- 2005 077 752

- **PATENT ABSTRACTS OF JAPAN vol. 018, no. 424 (M-1652), 9 August 1994 (1994-08-09) & JP 06 127428 A (KOBE STEEL LTD), 10 May 1994 (1994-05-10)**
- **PATENT ABSTRACTS OF JAPAN vol. 017, no. 027 (M-1355), 19 January 1993 (1993-01-19) & JP 04 252754 A (NKK CORP), 8 September 1992 (1992-09-08)**
- **PATENT ABSTRACTS OF JAPAN vol. 1995, no. 10, 30 November 1995 (1995-11-30) & JP 07 186848 A (NKK CORP), 25 July 1995 (1995-07-25)**
- **PATENT ABSTRACTS OF JAPAN vol. 018, no. 374 (M-1638), 14 July 1994 (1994-07-14) & JP 06 101732 A (KOBE STEEL LTD), 12 April 1994 (1994-04-12)**
- **PATENT ABSTRACTS OF JAPAN vol. 2002, no. 12, 12 December 2002 (2002-12-12) & JP 2002 240658 A (TORAY IND INC), 28 August 2002 (2002-08-28)**
- **PATENT ABSTRACTS OF JAPAN vol. 2003, no. 09, 3 September 2003 (2003-09-03) & JP 2003 139180 A (KOBE STEEL LTD), 14 May 2003 (2003-05-14)**
- **PATENT ABSTRACTS OF JAPAN vol. 2003, no. 10, 8 October 2003 (2003-10-08) & JP 2003 160062 A (KIKUCHI CO LTD), 3 June 2003 (2003-06-03)**

## Description

## FIELD OF THE INVENTION

The present invention relates to, for example, a shock absorbing component for automobiles. More particularly, the present invention relates to a shock absorbing component used as a structural component in automobiles which has high energy absorption volume.

## RELATED ART

Conventionally, composite materials of a combination of two or more types of materials have been developed for various purposes such as for strengthening materials. Out of these composite materials, those which reinforce material with fibers are called fiber-reinforced materials, of which fiber-reinforced rubber (FRR), fiber-reinforced metal (FRM), fiber-reinforced ceramic (FRC), fiber-reinforced plastic (FRP) are known. In particular, FRP is a material which uses plastic as a matrix (substrate), and it is known that glass or carbon fibers and the like are generally used as reinforcing material.

Fiber-reinforced plastic (FRP) which uses carbon fibers as reinforcing material are called carbon fiber-reinforced plastic (CFRP) and is positioned in the core of advanced composite materials. It is known as structural material which is essential in the aviation field and space field as light-weight, high-strength, and high-modulus material. Unidirectional material (UD material) and cross material which have differing structure and characteristics according to the alignment of the carbon fibers are known as CFRP materials. UD material has a material configuration wherein carbon fibers are laid out thinly in one direction and molded by epoxide resin or the like. On the other hand, cross material has a material configuration wherein carbon fibers are woven into a fabric-state and molded by epoxide resin or the like. These CFPR have heat-resisting and corrosion-resisting properties while being light in weight, about 25% the weight of iron.

On the other hand, in vehicles such as automobiles, more superior shock energy absorbency is expected for beam material used in the side parts of automobiles, such as the front pillar, center pillar, and rear pillar, as protective measures for passengers,. Additionally, with regards to materials for these pillars, light-weight materials are preferred for further mileage improvement, and aluminum material or aluminum base alloy materials are known. Shock absorbing material which is more light-weight and has higher energy absorption volume than these materials is desired.

The frame which is placed as side part structural material in automobiles is formed by extrusion-molding or press-molding a single material and shaping the cross-sections as closed cross-sections and large cross-sections, and thereby improving strength and rigidity and enhancing energy absorption volume at the time of impact. In general, as deformation mode at the time of side surface impact, giving the center pillar as an example, it is subject to three-point bending which bends with the upper side roof rail and the lower side sill as the fulcrums. Therefore, a side part structural material which has high resistance to the load of three-point bending and has little flexure due to bending is desired.

For example, if aluminum material or aluminum base alloy material (hereinafter referred to as simply aluminum) is used as the shock absorbing component for pillars, a hollow structure is adopted to attain a large polar moment of inertia of area with the same weight. With regards to deformation when using beam material such as aluminum, characteristically, load strength deteriorates rapidly immediately after the load applied reaches maximum strength. This indicates that, when the load applied exceeds the yielding point, the amount of deformation of the automobile body once yielding point is exceeded is large because the shock absorbing component can be deformed easily with a small load. In other words, as a result, the energy absorption volume calculated by the product of load and displacement decreases because the bearable load decreases as soon as the yielding point is exceeded and a large automobile body is deformed by a small load. Correspondingly, a characteristic desired in shock absorbing component for pillars is to continuously maintain load strength until a certain displacement is reached, even if load in the vicinity of the yielding point is continuously applied after the load has reached maximum strength and has exceeded the yielding point.

With regards to the foregoing, a component wherein FPR material is adjoined to the expanded surface side of hollow aluminum material and integrated is proposed in JP-A-06-101732. This is a technology which attempts to realize large energy absorption and small deformation by absorbing shock with the compressed surface and reducing the amount of deformation to the surface on the expanded surface, by using a plastic component which is easily deformed on the compressed surface and a high-strength, light-weight component on the expanded surface.

However, in the shock absorbing component in JP-A-06 101732, the compressed side and the side surface thereof undergoes buckle deformation due to load to the compressed side, and load is concentrated on this part wherein buckle deformation occurs. This is because, in addition to the force of load directly pressing onto the compressed surface, bending load is generated by the side surface resisting the load from the compressed surface and this bending load is also concentrated on the buckle deformation part. If the load is concentrated on the buckle deformation part, the strength of the shock absorbing component against load is influenced by the strength of the buckle deformation part.

JP-A-06-127428 discloses a shock absorbing compound in accordance with the preamble of claims 1 and 6. There, the buckling strength is controlled by determining specific thickness/height/width relation of the flange and web portions of hollow beam members.

In JP-A-04-252754 a profiled vehicle bumper beam is made from one-way reinforcing material combining glass fibre, carbon fibre or aramid fibre and resin. There, a portion requiring bending strength is made thicker than the other portion requiring a buckling strength.

## SUMMARY OF THE INVENTION

The object of the present invention is to provide a shock absorbing component which has increased energy absorption volume from that of conventional components by preventing the concentration of load to only the buckle deformation part.

The inventors of the present invention have put in keen research into the resolution of the foregoing issues. As a result, by implementing a hollow, long, rectangular material as the shock absorbing component for automobiles, and using a surface component with large tensile strain, rather than a surface component comprising compressed surface to which load from impact is directly applied, as surface components comprising the surface to which the load of impact to this hollow, long, rectangular material is applied and the two roughly perpendicular side surfaces, they have discovered that the energy absorption performance of the shock absorbing component can be enhanced, and thus, the invention has been completed. The present invention provides a shock absorbing component in accordance with claim 1 and a method in accordance with claim 6.

A shock absorbing component, used as a structural component in automobiles, which is a hollow, long rectangular material comprising a first surface member which is compressed by directly receiving an impact, a second surface member which faced the first surface member, and two side surface members connecting the first surface member and the second surface member, wherein the two side surface members are formed from fiber-reinforced material with a larger tensile strength than the first surface member, characterized in that the first and second surface members are made from one direction material with the fiber direction extending in the longitudinal direction of the shock absorbing component, and that the two side surface somponents of the shock absorbing component have a structure wherein a plurality of sheet-shaped fiber-reinforcement materials of which the fiber direction is aligned in roughly one direction are layered, wherein the fiber direction of one sheet-shaped fiber-reinforcement material and the fiber direction of the other sheet-shaped fiber-reinforcement materials are layered with a certain angle.

Preferably, in the shock absorbing component according to claim 1, in the two side surface members the fiber direction of one sheet-shaped fiber-reinforcement material is a certain angle to the longitudinal direction, and the fiber direction of other sheet-shaped fiber-reinforcement materials have an angle to the longitudinal direction with differs from the aforementioned certain angle, and these sheet-shaped fiber-reinforcement materials are layered.

Preferably, the sheet-shaped.fiber-reinforcement material is a glass-, aramid- or basalt fiber-reinforcement material.

Preferably, the sheet-shaped fiber-reinforcement material is carbon fiber-reinforcement plastic (CFRP).

Preferably, the shock absorbing component is a structural component.

According to the present invention, a "dogleg-shaped" wreck deformation of the end of the compressed first surface member and the concentration of bending load and load to the buckle deformation part of the shock absorbing component can be avoided. In other words, although tension will be generated on the side surface members by impact load being applied on the compressed first surface member, by this tension being replaced by the force which strains and deforms the surface component of the side surface members, the side surface members are compressively deformed without being pulled by the buckle deformation on the compresses side.

According to the present invention, by implementing a hollow, long, rectangular material as the shock absorbing component in automobiles and using a surface component with a larger tensile strain than the surface component comprising the compressed first surface member to which the load due to impact is directly applied for the two perpendicular side surfaces to which the load of impact to the hollow, long, rectangular material is applied, a shock absorbing component which has increased absorption energy volume from that of conventional components is provided.

## BRIEF DESCRIPTION OF THE DRAWINGS

Fig. 1A is a pattern diagram showing an example wherein the shock absorbing component according to the embodiment of the present invention is applied to the pillar of automobile.

Fig. 1B is a pattern diagram showing an example wherein the shock absorbing component according to the embodiment of the present invention is applied to the pillar of automobile.

Fig. 1C is a pattern diagram showing an example wherein the shock absorbing component according to the embodiment of the present invention is applied to the pillar of automobile.

Fig. 1D is a pattern diagram showing an example wherein the shock absorbing component according to the embodiment of the present invention is applied to the pillar of automobile.

Fig. 2 is a schematic diagram showing a bending moment, when stress is generated in the shock absorbing component

Fig. 3A is a pattern diagram showing the plasticity bending moment to compare the aluminum with the CFRP material.

Fig. 3B is a pattern diagram showing the plasticity bending moment to compare the aluminum with the CFRP material.

Fig. 3C is a pattern diagram showing the plasticity bending moment to compare the aluminum with the CFRP material.

Fig. 4 is a graph chart comparing specific energy absorption volume of .three defferent shock absorbing component.

Fig. 5 is a pattern diagram showing a state of compressed surface and expanded surface when load is applied to the shock absorbing component.

Fig. 6A is a diagram showing the tensile direction and the tensile strength for UD materials and cross materials

Fig. 6B is a diagram showing the tensile direction and the tensile strength for UD materials and cross materials

Fig. 6C is a diagram showing the tensile direction and the tensile strength for UD materials and cross materials

Fig. 6D is a diagram showing the tensile direction and the tensile strength for UD materials and cross materials

Fig. 6E is a diagram showing the tensile direction and the tensile strength for UD materials and cross materials

Fig. 7A is a graph showing that load characteristics differ according to the type of expanded surfaces on the shock absorbing component.

Fig. 7B is a graph showing that load characteristics differ according to the type of expanded surfaces on the shock absorbing component.

Fig. 8A is a schematic diagram showing that the load displacement actually differs with the side component of the expanded surface of the shock absorbing component and deformation of shock absorbing component when load is applied.

Fig. 8B is a schematic diagram showing that the load displacement actually differs with the side component of the expanded surface of the shock absorbing component and deformation of shock absorbing component when load is applied.

Fig. 9A is a diagram showing a load distribution and deformation of shock absorbing component when load is applied to conventional shock absorbing component and when load is applied to shock absorbing component of the present invention.

Fig. 9B is a diagram showing a load distribution and deformation of shock absorbing component when load is applied to conventional shock absorbing component and when load is applied to shock absorbing component of the present invention.

Fig. 9C is a diagram showing a load distribution and deformation of shock absorbing component when load is applied to conventional shock absorbing component and when load is applied to shock absorbing component of the present invention.

Fig. 10 is a graph showing load displacement curve of shock absorbing component according to the invention.

## DESCRIPTION OF THE PREFERRED EMBODIMENT

One example of a preferred embodiment of the present invention is explained below with reference to the drawings.

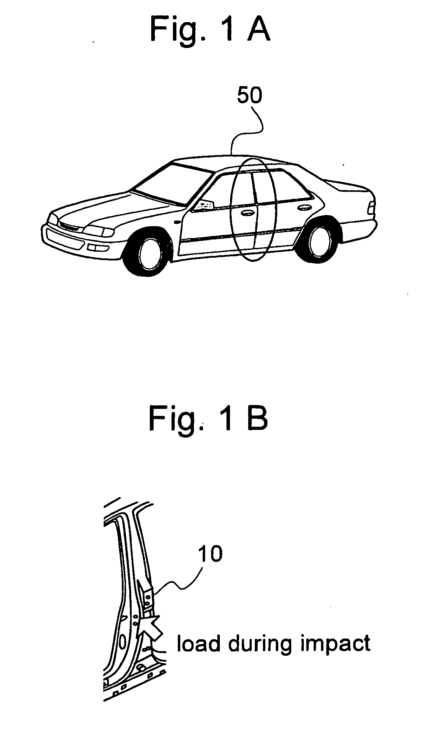

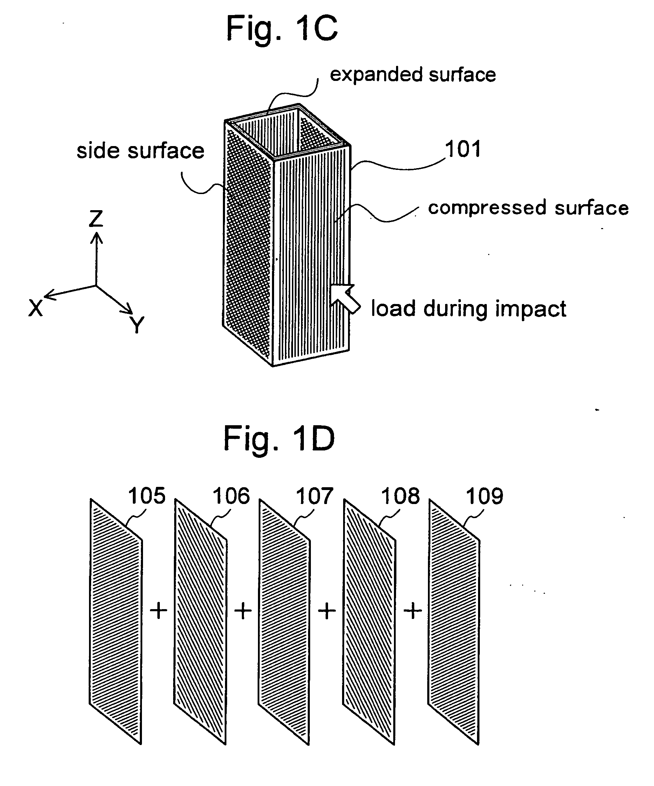

Figs. 1A, B, C, and D show an example wherein the shock absorbing component 101 according to the preferred embodiment of the present invention is applied to the center pillar 10 of automobile 50. As shown in Figs. 1A and B, the object of the present invention is, for example, to provide a shock absorbing component 10 which realizes sufficient energy absorption for impact due to side impact to the side surface part of an automobile. As one example, Fig. 1C shows a shock absorbing component 101 implementing UD material (unidirectional material) on all surfaces of the shock absorbing component as the CFRP (carbon fiber-reinforced plastic) used in the surface component.

Although here, in Fig. 1B, the present invention is applied to the structural component of the side surface part of the automobile, it is applicable to any structural component of the automobile. For example, the shock absorbing component of the present invention can be used in the front pillar and the rear pillar, as well.

Compressed surface is a surface which directly receives load from impact and is a surface almost parallel to the side surface of the automobile. In addition, it can also be surface which mainly receives compressive stress from the load. Expanded surface is a surface facing the compressed surface and is a surface which indirectly receives load from impact. In addition, it can also be surface which mainly receives tensile stress from the load from impact. Furthermore, the side surface of the shock absorbing component is a surface roughly perpendicular to the compressed surface and is a surface which indirectly receives load from impact. In addition, the side surface is a surface which mainly receives shear stress from the load from impact, and is a surface perpendicular to the side surface of the automobile.

The shock absorbing component 101 can use carbon fiber, glass fiber, aramid fiber, and basalt fiber as reinforced fiber, and epoxide resin, polypropylene, unsaturated polyester, vinylester, and aluminum can be used as base materials for these fibers. With regards to the merging of these base materials and reinforced fibers, it is a layered sheet-shaped one-direction UD material wherein the fiber direction is aligned in one direction.

UD material is a material form of FRP material. A sheet-shaped UD material is sheet-shaped FRP wherein the reinforced fibers are aligned in basically one direction, and one-direction UD material is this sheet UD material layered in the fiber direction. Because the tensile strength in the fiber direction is high, one-direction UD material is a FRP material which has anisotropy.

In addition, unlike one-direction UD material, the fiber direction can differ with each layer. For example, as shown in Fig. 1D, the side surface of shock absorbing component 101 is constructed by alternately layering sheet-shaped UD material 105, 107, and 109 of one fiber direction (135 degrees to the longitudinal direction) and sheet-shaped UD material 106 and 108 of a differing fiber direction (45 degrees in the longitudinal direction). When layering, as shown in the drawing, it can be layered by alternating one sheet at a time or, by layering two or more sheets of the sheet-shaped UD material of the same fiber direction as one set, layered by alternating one set at a time.

Cross material is a material form of FRP material. It is sheet-shaped FRP material aligned in a fabric-state by weaving in fiber as the structure of reinforced fiber of FRP material or is FRP material wherein this sheet-shaped FRP material is layered. In other words, cross material is a FRP material wherein a flat surface is formed by weaving one strand or plural strands of reinforced fiber and this flat surface is hardened using resin substrate or the like. As weaving methods for forming a fabric-state, it can be flat-weaving or twill-weaving. Unlike one-direction UD material, cross material is generally a FRP material which is isotropic in strength.

Fiber direction is the direction of the fiber determined by aligning carbon fibers unidirectionally when forming FRP material by combining carbon fibers. In addition, an angle from one fiber direction is determined for the surface of the shock absorbing component, and this is referred to as fiber orientation angle (orientation angle). Fiber orientation angle is an angle determined by the center axis which extends in the longitudinal direction of the shock absorbing component, passing through the center of the shock absorbing component, and the fiber direction.

It is explained here that the shock absorbing component of FRP material has a higher load characteristic in comparison to conventional aluminum. Component which realizes shock absorption by deforming by bending perpendicular to the longitudinal direction of the shock absorbing component considered from the perspective of bending moment.

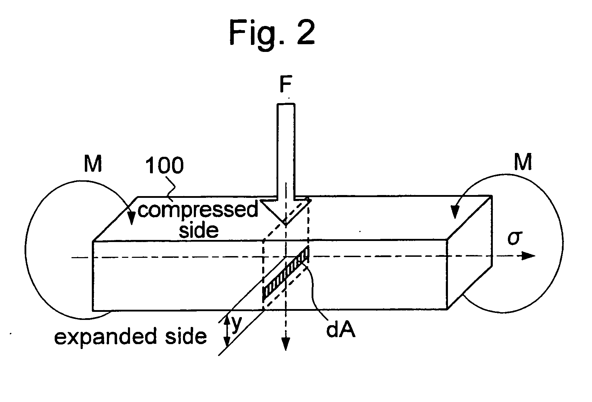

Generally, with regards to bending in beams, when vertical stress is generated in the shock absorbing component 100, as shown in Fig. 2, and if distance from the center axis of the shock absorbing component 100 is distance y, micro-area dA, and the strength of the shock absorbing component σ, yσdA moment is generated. Therefore, the bending moment which affects the beam center part cross-section is as expressed in Equation (1)

[Equation 1]

$$M = \int_A y\,\sigma\,dA$$

Here, strength σ can be adjusted by the structure and the orientation angle of FRP material and can be set to be stronger than aluminum. For example, the strength of one direction UD material (orientation angle of 0 degrees) (Toray Industries, Inc. manufactured Carbon fiber T700S, implementing epoxide resin as substrate) is 2600MPa and the strength of cross material is 798MPs. Correspondingly, the strength of aluminum (5000system) is small, 270MPa (Young's modulus 71GPa, destruction strain 14%, and Poisson's ratio 0.3). Therefore, in aluminum and FRP material wherein the distance y from the central axis is equal, because the strength of FRP is larger, the bending moment which can be tolerated increases, and enables the FRP material to have a larger load characteristic.

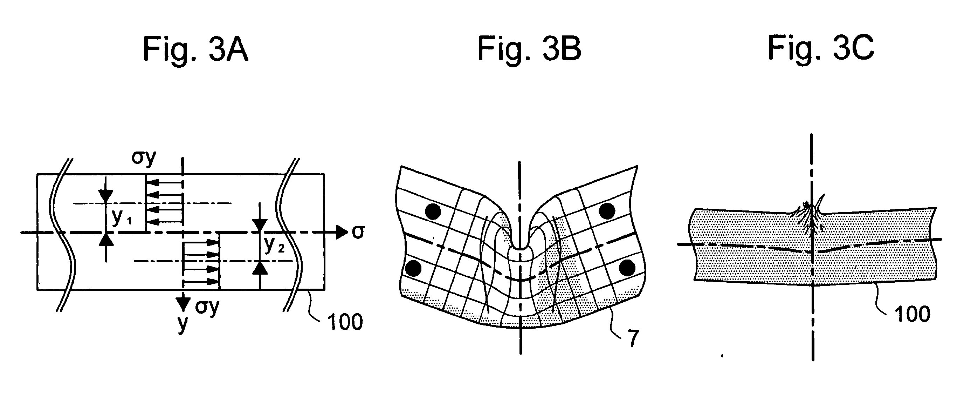

Furthermore, it is explained here that FRP material has high energy absorption performance because the cross-section of the shock absorbing component does not change even when a load is added. If the shock absorbing component is presumed to have a perfect-plasticity body, the plasticity bending moment of the beam is as expressed in Equation (2) (refer to Figs. 3A-C).

$$M_p = \sigma_y A(y_1 + y_2)/2$$

Here, $\sigma_y$ is the yield point stress, $y_1$ is the distance from the neutral axis to the compressed surface, $y_2$ is the distance from the neutral axis to the expanded surface, and A is the center part cross-section area of the shock absorbing component. Each corresponding variable is stated in Fig. 3A.

The shape of aluminum which has deformed by applying load to the proximity of the yielding point, when aluminum is used as the shock absorbing component, is shown in Fig. 3B. As shown in the diagram, in the case of aluminum, the value id the center part cross-section area A of aluminum 7 becomes smaller with the deformation due to load. With this, distance $y_1$ and $y_2$ from the neutral axis to the compressed surface and the extended surface also decrease. As a result, the plasticity bending moment $M_p$ also decreased and therefore, the load value must also be decreased after applying load up to the vicinity of the yielding point.

FRP material which has deformed by applying load up to the vicinity of the yielding point, when using FRP material as the shock absorbing component 100, is shown in Fig. 3C. In the case of FRO material, the foregoing cross-section area A and the distances $y_1$ and $y_2$ are stable, as shown in the diagram, where load is applied. This is because denting from load, such as with aluminum, does not occur because the plasticity deformation of FRP material progresses. Therefore, from Equation (2), the value of plasticity bending moment $M_P$ does not decrease and the load value does not immediately decrease even when load is applied up to the proximity of the yielding point. As a result, it can be expected that FRP material indicated high energy absorption performance.

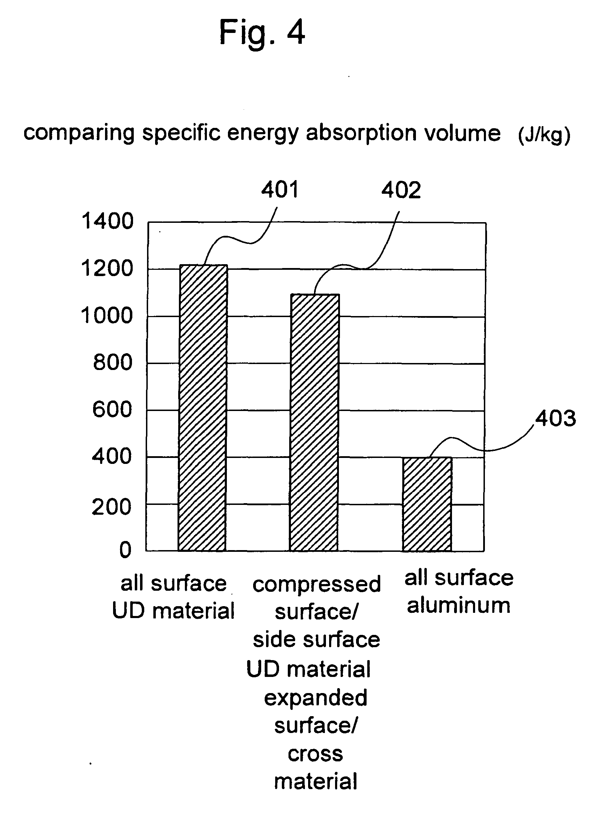

A graph chart comparing specific energy absorption volume (energy absorption volume per unit weight) is shown in Fig. 4. FRP material, here, uses Toray Industries, Inc. manufactured Carbon fiber T700S as reinforced fiber and implements epoxide resin for substrate. The Young's modulus of one-direction UD material (orientation angle of 0 degrees) is 140GPa, the destruction strain 1.9%, Poisson's ratio 0.32, and the strength 2600MPa. The Young's modulus of cross material is 89GPa, the destruction strain 0.9%, Poisson's ratio 0.07, and the strength 798MPa.

In an experiment, the specific gravity of aluminum shock absorbing material is $7.6/\text{cm}^3$ and the specific gravity of CFRP material is $1.6/\text{cm}^3$. Graph 402 shows the results of when cross material is implemented in only the extended surface and the one-direction UD material (0 degrees) for all other surfaces. Graph 401 shows the results of when one-direction UD material (0 degrees) is implemented for all surfaces. Graph 403 is the results when the aforementioned aluminum is implemented in the shock absorbing component. The specific energy absorption volume of shock absorbing component 101 formed from one-direction UD material (0 degrees) was over 1200J/kg, to the specific energy absorption volume of shock absorbing component, formed from aluminum, of about 400J/kg. It can be considered that CFRP material realizes higher energy absorption because it has larger bending moment than aluminum and there is no decrease in the cross-section area of the compressed part due to load.

In addition to the high energy absorption characteristic shown by using one-direction UD material (0 degrees) as FRP material for the shock absorbing component, it can be considered that, if a different type of UD material is implemented according to the stress applied on each surface of the shock absorbing component, an even higher energy absorption characteristic will be shown.

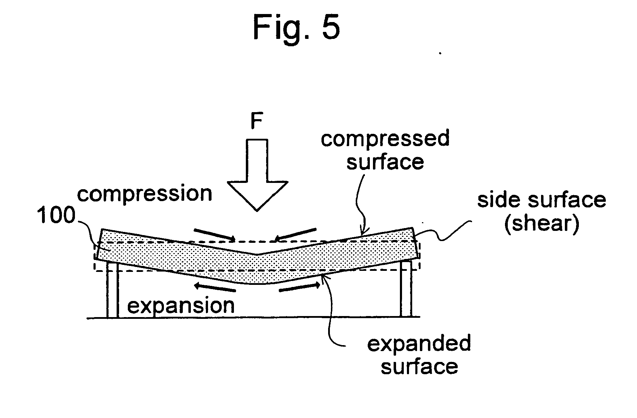

A schematic diagram of when load is applied to the shock absorbing component of an automobile which receives bending deformation is shown in Fig. 5. In general, the pillar material receives three pint bending, with the upper part side roof rail and the lower part side sill as the fulcrum points. At this time, stress is mainly applied in the direction in which the surface is compressed by the load, in the compressed surface to which load is directly applied. Furthermore, in addition to slippage due to load, shear stress is applied to the side surface. What FRP material should be used for which surface, as FRP material corresponding to differing stress such as these, is deliberated, below.

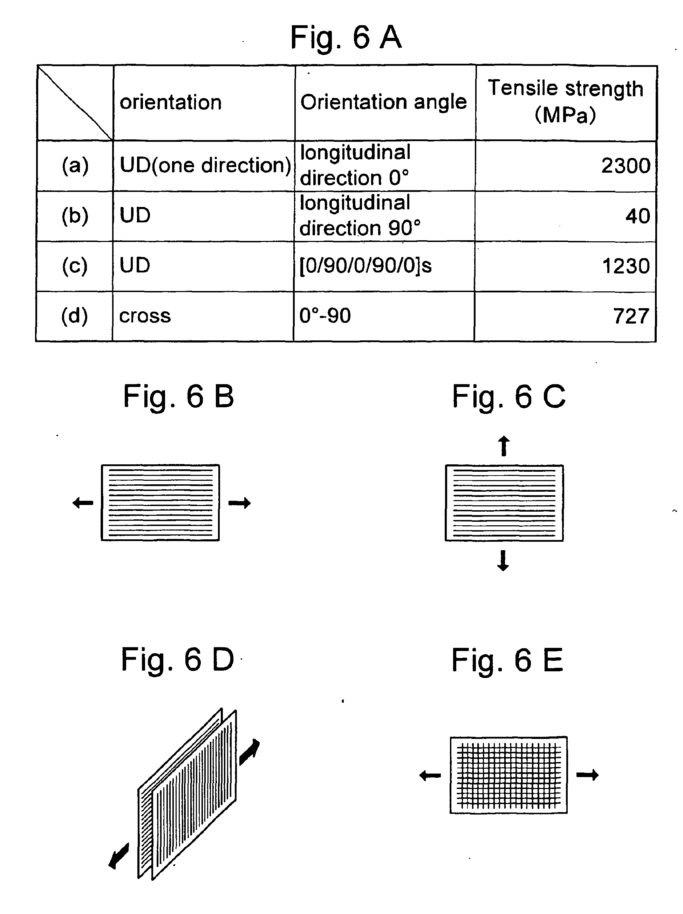

A table showing the results of tensile strength measurements for UD materials and cross materials (height 25mm, length 200, thickness 2mm and 10-sheet layer) with differing properties as FRP material, and a schematic diagram showing the tensile direction of each material is shown in Figs. 6B~E. Through this, it is indicated that the tensile strength differs with the structure of FRP material and the orientation angle of the carbon fibers. Fig. 6B is a schematic diagram showing tension in the fiber direction of one-direction UD material. Fig, 6D is a schematic diagram showing tension 90 degrees to the fiber direction of UD material. Fig. 6D is a schematic diagram showing tension of a UD material formed by alternately layering UD materials of which the orientation angles are orthogonal at 0 degrees and -90 degrees. Fig. 6E is a schematic diagram showing tension in the surface width direction of cross material. These measurements use PAN-carbon fibers and epoxide resin as the substrate.

As shown in the tables in Fig. 6A, because one-direction UD material indicates anisotropy to tensile strength and because the tensile strength of one-directional UD material with a fiber direction of 0 degrees in the longitudinal direction is the largest within the samples, this FRP material can be thought suitable for use in the expanded surface of the shock absorbing component in Fig, 5. In other words, it is preferable to use UD material in the expanded surface which is the surface opposite to the surface receiving impact, as one embodiment, and set the orientation angle to be parallel to Z axis such that the fiber direction of carbon and the tensile direction when load is applied is the same.

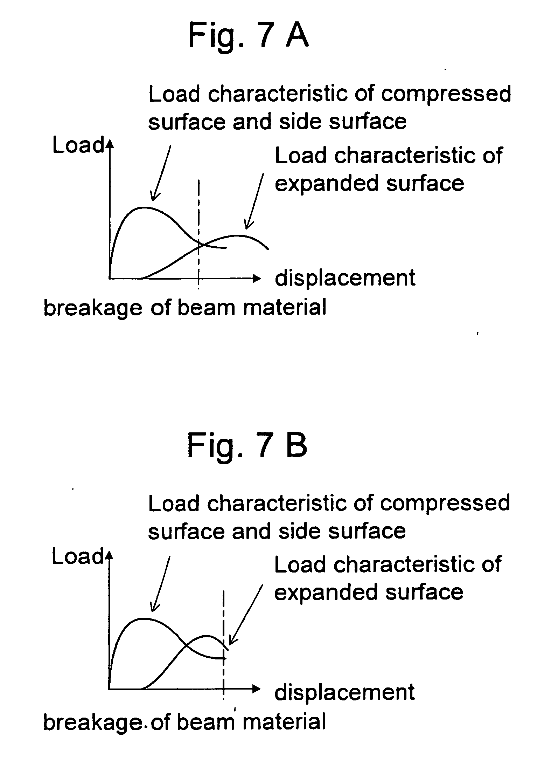

Figs. 7A and B show that load characteristics differ according to the type of expanded surfaces on the shock absorbing component. For example, if one-directional UD material (0 degrees) is used for the compressed surfaces and the side surfaces, and cross materials (0 degrees and -90 degrees) for the expanded surfaces, because the Young's modulus of cross material in the expanded surface is 89MPa, as shown in Fig. 7, the load does not rise in the expanded surface when the compressed surface and the side surface exceeds the yielding point and breaks and the contribution of the expanded surface to energy absorption is small. In contrast, shock absorbing component wherein all surfaces are formed from one-direction UD material have a Young's modulus of 140MPa on the extended surface and the load rise of the expanded surface is fast (refer to Fig. 7B). Therefore, it is possible for the expanded surface to receive and hold the load when the compressed surface and the side surface break, and the energy absorption of the entire shock absorbing component can be increased. As shown in Fig. 4, graph 401 which uses one-direction UD material for all surfaces has a specific energy absorption volume which is about 100J/kg larger than that in graph 402 using cross material for expanded surfaces.

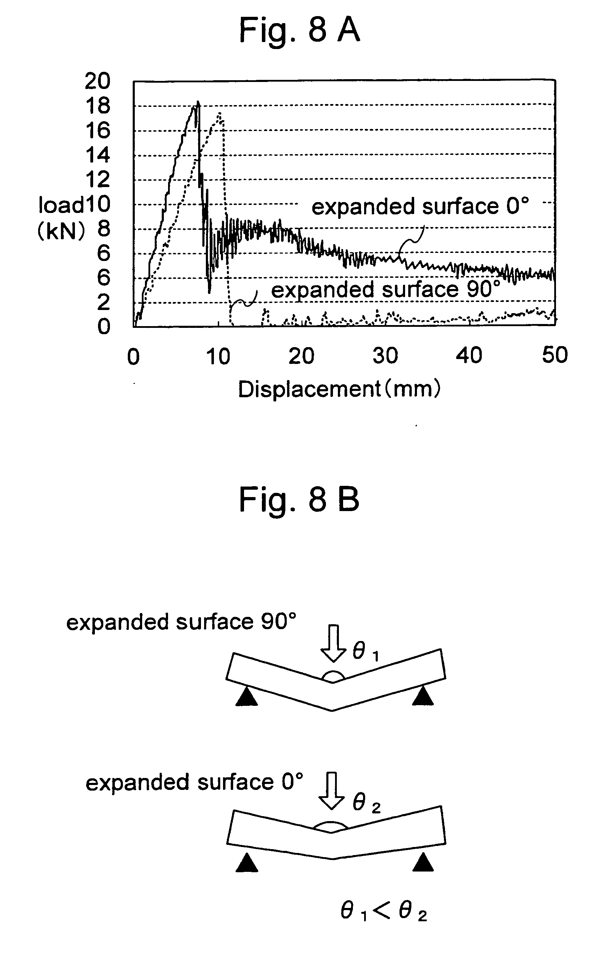

The graph in Figs. 8A, B shows that the load displacement actually differs with the side component of the expanded surface of the shock absorbing component. The shock absorbing component used here implements UD material of CFRP, one-direction UD material (0 degrees) in the compressed surfaces and side surfaces, and the one-direction UD material (0 degrees) or one-direction UD material (90 degrees) in the expanded surfaces.

Absorption energy volume is the amount integrated by displacing load in this graph. Therefore, absorption energy volume becomes larger by implementing one-direction UD material (0 degrees) for the expanded surfaces, rather than the one direction UD material (90 degrees). This is because, as shown in Fig. 8B, the bending angle ($\theta_1$) of the shock absorbing component becomes small since the strain volume is large when using one-direction UD material (90 degrees). As a result, stress is concentrated in the center part of the shock absorbing component and breakage in the compressed surface is accelerated. In contrast, if the one-direction UD material (0 degrees) is used, because the strain volume of the expanded surface is small, the bending angle ($\theta_2$) of the shock absorbing component becomes small. As a result, stress is dispersed in a wide area of the compressed surface and breakage on the compressed surface of the beam center part can be prevented.

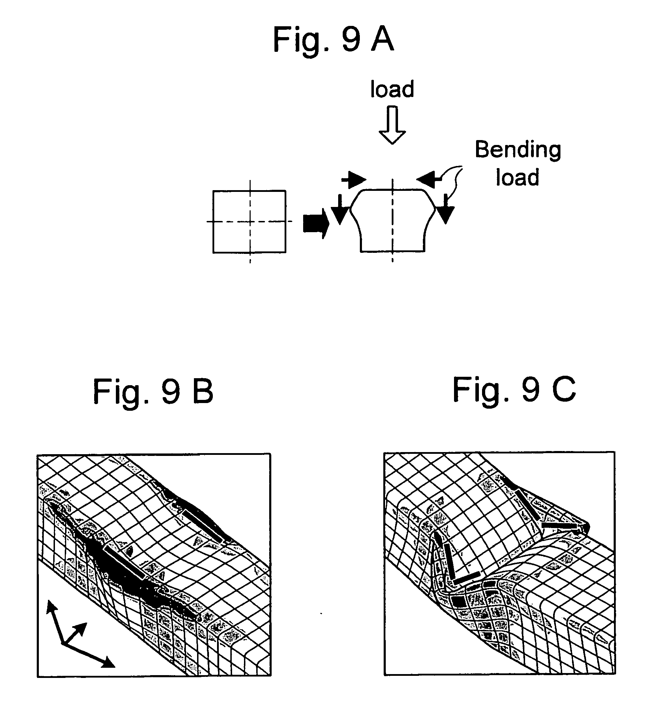

Next, the most preferable surface component for the compressed surfaces and side surfaces of the shock absorbing component is deliberated. Figs. 9A~C are diagrams showing a cross section of the shock absorbing component, indicating that a three-point bending occurs when load is applied to the upper surface of this shock absorbing component. Here, Fig. 9A shows the three-point bending of the shock absorbing component of conventional aluminum or the like. Due to load to the compressed surface which is the upper surface, the compressed surfaces and side surfaces are buckle-deformed. However, load is concentrated only on the parts wherein this buckle deformation occurs (Fig. 9B). This is because bending load is generated by the side surfaces resisting the load from the compressed surface, in addition to the force of the load directly pressing the compresses surface, and this bending load is also concentrated on the buckle deformation part. When the load is concentrated to the buckle deformation part, the strength of the shock absorbing component to load becomes influenced by the strength of the buckle deformation part.

Therefore, as stated above, although bending load is generated by the side surface resisting load received by the compressed surface, a side surface which does not allow the generation of bending load is considered. As shown by the arrow in Fig. 9B, the side surface generates tensile force in the longitudinal direction due to load from the compressed surface and this becomes bending load. Therefore, bending load can be prevented by preventing the generation of this tensile force. Thus, it is though that bending load can also be prevented by implementing side component with a large tensile strain, enabling the upper surface end part to collapse first and preventing the generation of tensile force.

On the other hand, through tensile tests in the longitudinal direction, it has been discovered that UD material ([45/135/45/135/45]s) has seven times as much train due to tension as one-direction UD material (0 degrees). Here, UD material ([45/135/45/135/45]s) is UD material wherein ten layers are layered symmetrically by implementing sheet-shaped UD material of 45 degrees to the longitudinal direction of the shock absorbing component in layer 1, 3 and 5, and UD material implementing sheet-shaped UD material of 135 degrees to the longitudinal direction of the shock absorbing component in layer 2 and 4.

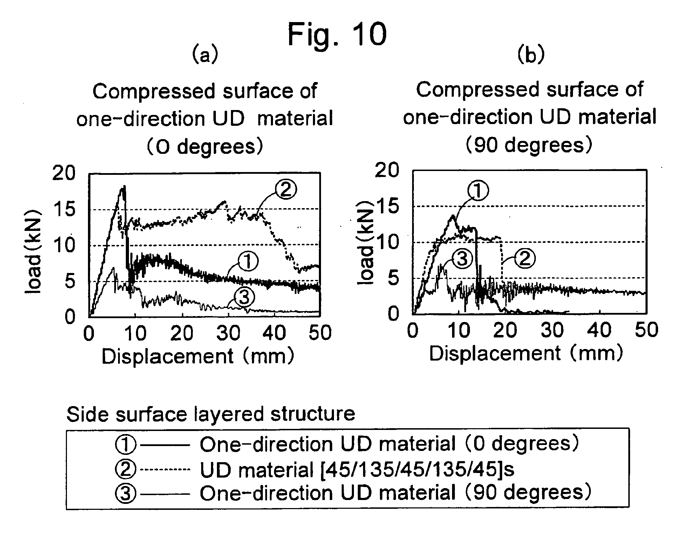

Then, this UD material ([45/135/45/135/45]s) is implemented in the side surface. Fig. 10(a) is the load displacement curve when one-direction UD material (0 degrees) is used for the compressed surface and one-direction UD material (0 degrees) is used for the expanded surface. As side surface, the above UD material ([45/135/45/135/45]s), and for comparison, one-direction UD material (0 degrees) and one-direction UD material (90 degrees) are implemented. In addition, Fig. 10(b) is the load displacement curve when one-direction UD material (0 degrees) is used for the compressed surface and the side surface and expanded surface use the same material as in Fig. 10(a). Here, the shock absorbing component has a 50x50mm cross-section and is 600mm in the longitudinal direction. Furthermore, as reinforced fiber, Toho-Tenex K.K. manufactured carbon fiber HTA is implemented and CRF formed from epoxide resin (#112) as the substrate is used.

Through these results, shock absorbing component wherein the side surface is UD material ([45/135/45/135/45]s) maintains an average load of 14kN until displacement of about 10mm, and in comparison with other UD materials, has the largest absorption energy volume. This is because load is not concentrated on the buckle deformation part because the end part of the compressed surface is wreck deformed into a dog-legged shape, as shown in Fig. 9C. In other words, although tensile force is generated on the side surface because load is applied to the compressed surface, bending load is not generated because the side surface compression deforms without being influenced by the buckle deformation of the compressed surface, and the concentration of load to the buckle deformation part can be prevented.

Therefore, as one embodiment of the shock absorbing component, by using one-direction UD material (0 degrees) for the compressed surface which directly receives load, one-direction UD material (0 degrees) for the expanded surface, and UD material ([45/135/45/135/45]s) for the side surfaces, the reduction of cross-section area of the shock absorbing component can be prevented by the collapse of the end part of the compressed surface during load, and a shock absorbing component with high energy absorption can be provided.

More particularly, when the shock absorbing component is used as pillar material in an automobile, as shown in Fig, 1, the direction from the roof of the automobile to the chassis can be the longitudinal direction of the shock absorbing component 101. Furthermore, the surface parallel to the side surface of the automobile and the surface facing the interior of the automobile (namely, surface wherein the normal vector faces the interior of the automobile, and the surface towards the back of the side impact direction during impact) are the compressed surfaces, one-direction UD material (0 degrees) is used as the surface component of the compressed surface. In addition, as the surface component of the side surface of the shock absorbing component 101 which is the surface perpendicular to the side surface of the automobile, UD material ([45/135/45/135/45]s) is used. In this way, as one example, pillar material which can attain high specific energy characteristics such as the foregoing by placing the shock absorbing component 101 on the side surface part of the automobile can be provided.

The present invention is a structural component for absorbing impact of an automobile and is a shock absorbing component actualizing reduction in weight through higher energy absorption than that of the conventional. By using this component in pillars and the like of automobiles, an automobile which ensures a lighter weight and enhanced safety than the conventional can be provided.

A shock absorbing component used as a structural component in automobiles which realize a larger specific energy absorption volume compared to the conventional, and by implementing a hollow, long, rectangular material as the shock absorption component in automobiles and by using a surface component with a larger tensile strain than the surface component comprising the compressed surface to which load from impact is directly applied as the two side surfaces perpendicular to the surface to which load from impact to the hollow, long, rectangular material is applied, a shock absorbing component which has an increased absorption energy volume from the conventional component can be provided.

## Claims

1. A shock absorbing component, used as a structural component in automobiles, which is a hollow, long rectangular material comprising a first surface member which is compressed by directly receiving an impact, a second surface member which faces the first surface member, and two side surface members connecting the first surface member and the second surface member, wherein the two side surface members are formed from fiber-reinforced material with a larger tensile strength than the first surface member,

**characterised in that**
the first and second surface members are made from one direction material with the fiber direction extending in the longitudinal direction of the shock absorbing component,
the two side surface members of the shock absorbing component have a structure wherein a plurality of first and second sheet-shaped fiber-reinforcement materials of which the fiber direction is aligned in roughly one direction are alternately layered and wherein the angle between the fiber direction of the first sheet-shaped fiber-reinforcement material (105, 107, 109) and the longitudinal direction of the shock absorbing component and the angle between the fiber direction of the second sheet-shaped fiber-reinforcement material (106, 108) and the longitudinal direction of the shock absorbing component are different.

2. The shock absorbing component according to claim 1 , wherein the sheet-shaped fiber-reinforcement material is a glass-, aramid- or basalt fiber-reinforcement material.

3. The shock absorbing component according to claims 1 or 2, wherein the sheet-shaped fiber-reinforcement material is carbon fiber-reinforcement plastic (CFRP).

4. An automobile implementing the shock absorbing component to any one of claims 1 to 3 as structural component.

5. A method for enhancing the shock absorption of automobiles by using a shock absorbing component as a structural component which is a hollow, long rectangular material comprising a first surface member which is compressed by directly receiving an impact, a second surface member which faces the first surface member, and two side surface members connecting the first surface member and the second surface member, wherein the two side surface members are formed from fiber-reinforced material with a larger tensile strength than the first surface member, **characterized by** making the first and second surface members from one direction material with the fiber direction extending in the longitudinal direction of the shock absorbing component, and providing the two side surface members of the shock absorbing component with a structure wherein a plurality of first and second sheet-shaped fiber-reinforcement materials of which the fiber direction is aligned in roughly one direction are alternately layered, wherein the angle between the fiber direction of the first sheet-shaped fiber-reinforcement material (105, 107, 109) and the longitudinal direction of the shock absorbing component and the angle between the fiber direction of the second sheet-shaped fiber-reinforcement material (106, 108) and the longitudinal direction of the shock absorbing component are different.

## Patentansprüche

1. Als Strukturkomponente in Automobilen verwendete stoßabsorbierende Komponente, die ein hohles, langes rechteckiges Material ist, welches ein erstens Oberflächenelement, das durch direkte Aufnahme eines Stoßes komprimiert wird, ein zweites Oberflächenelement, das dem ersten Oberflächenelement gegenüberliegt, und zwei Seitenoberflächenelemente, die das erste Oberflächenelement und das zweite Oberflächenelement verbinden, umfasst, worin die zwei Seitenoberflächenelemente aus faserverstärktem Material mit einer höheren Zugfestigkeit als das erste Oberflächenelement ausgebildet sind,

   **dadurch gekennzeichnet, dass** die ersten und zweiten Oberflächenelemente aus ein Ein-Richtungmaterial hergestellt sind, dessen Faserrichtung sich in der Längsrichtung der stoßabsorbierenden Komponente erstreckt,

   die zwei Seitenoberflächenelemente der stoßabsorbierenden Komponente eine Struktur haben, worin eine Mehrzahl von ersten und zweiten schichtförmigen Faserverstärkungsmaterialien, deren Faserrichtung in angenähert einer Richtung ausgerichtet ist, abwechselnd geschichtet sind, und worin der Winkel zwischen der Faserrichtung des ersten schichtförmigen Faserverstärkungsmaterials (105, 107, 109) und der Längsrichtung der stoßabsorbierenden Komponente und der Winkel zwischen der Faserrichtung des zweiten schichtförmigen Faserverstärkungsmaterials (106, 108) und der Längsrichtung der stoßabsorbierenden Komponente unterschiedlich sind.

2. Die stoßabsorbierende Komponente nach Anspruch 1, worin das schichtförmige Faserverstärkungsmaterial ein Glas-, Aramid- oder Basaltfaserverstärkungsmaterial ist.

3. Die stoßabsorbierende Komponente nach Anspruch 1 oder 2, worin das schichtförmige Faserverstärkungsmaterial ein Kohlefaserverstärkungskunststoff (CFRP) ist.

4. Automobil, das eine stoßabsorbierende Komponente nach einem der Ansprüche 1 bis 3 als Strukturkomponente implementiert.

5. Verfahren zum Verbessern der Stoßabsorption von Automobilen durch Verwendung einer stoßabsorbierenden Komponente als Strukturkomponente, die ein hohles, langes rechteckiges Material ist, welches ein erstes Oberflächenelement, das durch direkte Aufnahme eines Stoßes komprimiert wird, ein zweites Oberflächenelement, das dem ersten Oberflächenelement gegenüberliegt, und zwei Seitenoberflächenelemente, die das erste Oberflächenelement und das zweite Oberflächenelement verbinden, umfasst, worin die zwei Seitenoberflächenelemente aus faserverstärktem Material mit einer höheren Zugfestigkeit als das erste Oberflächenelement ausgebildet sind,

**dadurch gekennzeichnet, dass** die ersten und zweiten Oberflächenelemente aus ein Ein-Richtungmaterial hergestellt werden, dessen Faserrichtung sich in der Längsrichtung der stoßabsorbierenden Komponente erstreckt,

die zwei Seitenoberflächenelemente der stoßabsorbierenden Komponente mit einer Struktur versehen werden, worin eine Mehrzahl von ersten und zweiten schichtförmigen Faserverstärkungsmaterialien, deren Faserrichtung in angenähert einer Richtung ausgerichtet ist, abwechselnd geschichtet werden, und worin der Winkel zwischen der Faserrichtung des ersten schichtförmigen Faserverstärkungsmaterials (105, 107, 109) und der Längsrichtung der stoßabsorbierenden Komponente und der Winkel zwischen der Faserrichtung des zweiten schichtförmigen Faserverstärkungsmaterials (106, 108) und der Längsrichtung der stoßabsorbierenden Komponente unterschiedlich sind.

## Revendications

1. Composant absorbeur de choc, utilisé comme composant structurel dans des automobiles, qui est un matériau rectangulaire long et creux comprenant un premier organe de surface qui est comprimé en recevant directement un impact, un second organe de surface qui fait face au premier organe de surface, et deux organes de surface latéraux reliant le premier organe de surface et le second organe de surface, où les deux organes de surface latéraux sont formés d'un matériau renforcé de fibres de plus grande résistance à la traction que le premier organe de surface,

   **caractérisé en ce que**

   les premier et second organes de surface sont constitués d'un matériau unidirectionnel dont la direction de fibres s'étend dans la direction longitudinale du composant absorbeur de choc,

   les deux organes de surface latéraux du composant absorbeur de choc ont une structure dans laquelle une pluralité de premiers et seconds matériaux de renforcement par fibres en forme de feuille dont la direction de fibres est alignée grossièrement dans une direction sont formés en couches en alternance et où l'angle entre la direction de fibres du premier matériau de renforcement par fibres en forme de feuille (105, 107, 109) et la direction longitudinale du composant absorbeur de choc et l'angle entre la direction de fibres du second matériau de renforcement par fibres en forme de feuille (106, 108) et la direction longitudinale du composant absorbeur de choc sont différents.

2. Composant absorbeur de choc selon la revendication 1, dans lequel le matériau de renforcement par fibres en forme de feuille est un matériau de renforcement par fibres de verre, d'aramide ou de basalte.

3. Composant absorbeur de choc selon la revendication 1 ou 2, dans lequel le matériau de renforcement par fibres en forme de feuille est un plastique de renforcement par fibres de carbone (CFRP).

4. Automobile mettant en oeuvre le composant absorbeur de choc selon l'une quelconque des revendications 1 à 3, comme composant structurel.

5. Procédé de renforcement de l'absorption de choc d'automobiles par utilisation d'un composant absorbeur de choc en tant que composant structurel qui est un matériau rectangulaire long et creux comprenant un premier organe de surface qui est comprimé en recevant directement un impact, un second organe de surface qui fait face au premier organe de surface, et deux organes de surface latéraux reliant le premier organe de surface et le second organe de surface, où les deux organes de surface latéraux sont formés d'un matériau renforcé de fibres de plus grande résistance à la traction que le premier organe de surface,

**caractérisé par** le fait de constituer les premier et second organes de surface d'un matériau unidirectionnel dont la direction de fibres s'étend dans la direction longitudinale du composant absorbeur de choc, et

le fait de fournir les deux organes de surface latéraux du composant absorbeur de choc avec une structure dans laquelle une pluralité de premiers et seconds matériaux de renforcement par fibres en forme de feuille dont la direction de fibres est alignée grossièrement dans une direction sont formés en couches en alternance, où l'angle entre la direction de fibres du premier matériau de renforcement par fibres en forme de feuille (105, 107, 109) et la direction longitudinale du composant absorbeur de choc et l'angle entre la direction de fibres du second matériau de renforcement par fibres en forme de feuille (106, 108) et la direction longitudinale du composant absorbeur de choc sont différents.

# Fig. 1 A

50

# Fig. 1 B

10

load during impact

## Fig. 1C

expanded surface

side surface

compressed surface

101

load during impact

Z

X

Y

## Fig. 1D

105  106  107  108  109

+  +  +  +

# Fig. 2

## Fig. 3A

σy

y₁

y₂

σ

y
σy

100

## Fig. 3B

7

## Fig. 3C

100

# Fig. 4

comparing specific energy absorption volume  (J/kg)

# Fig. 5

## Fig. 6 A

| | orientation | Orientation angle | Tensile strength (MPa) |
|---|---|---|---|
| (a) | UD(one direction) | longitudinal direction 0° | 2300 |
| (b) | UD | longitudinal direction 90° | 40 |
| (c) | UD | [0/90/0/90/0]s | 1230 |
| (d) | cross | 0°-90 | 727 |

## Fig. 6 B

## Fig. 6 C

## Fig. 6 D

## Fig. 6 E

# Fig. 7 A

Load characteristic of compressed
surface and side surface

Load characteristic of
expanded surface

breakage of beam material

# Fig. 7 B

Load characteristic of compressed
surface and side surface

Load characteristic of
expanded surface

breakage of beam material

## Fig. 8 A

## Fig. 8 B

$\theta_1 < \theta_2$

# Fig. 9 A

load

Bending
load

# Fig. 9 B

# Fig. 9 C

Fig. 10

(a)

Compressed surface of
one-direction UD material
(0 degrees)

(b)

Compressed surface of
one-direction UD material
(90 degrees)

Side surface layered structure

| ① —— One-direction UD material (0 degrees) |
| ② ········· UD material [45/135/45/135/45]s |
| ③ —— One-direction UD material (90 degrees) |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6101732 A
- JP 6127428 A
- JP 4252754 A